# FASCICULE DE BREVET EUROPEEN

(11) **EP 2 959 121 B1**
(45) Date de publication et mention de la délivrance du brevet: **09.11.2022**
(21) Numéro de dépôt: 14710023.4
(22) Date de dépôt: 17.02.2014
(51) Int. Cl.: F01K 23/14, F01K 23/06, F01K 23/10

(54) **SYSTÈME DE RÉCUPÉRATION DE CHALEUR DES GAZ D'ÉCHAPPEMENT DANS UN MOTEUR À COMBUSTION INTERNE**
SYSTEM ZUR RÜCKGEWINNUNG VON WÄRME AUS DEN ABGASEN EINER BRENNKRAFTMASCHINE
SYSTEM FOR RECUPERATING HEAT FROM THE EXHAUST GASES IN AN INTERNAL COMBUSTION ENGINE

(30) Priorité: 20.02.2013 FR 1351433
(43) Date de publication de la demande: 30.12.2015
(73) Titulaire: Renault s.a.s, 92100 Boulogne Billancourt (FR)
(72) Inventeur: DONG, Yuxiang, F-75014 Paris (FR); EL-BAKKALI, Amin, F-78280 Guyancourt (FR)
(74) Mandataire: Renault Group
(86) Numéro de dépôt international: PCT/FR2014/050322
(87) Numéro de publication internationale: WO 2014/128393

(56) Documents cités:
- EP-A1- 2 336 537
- WO-A1-2011/122294
- WO-A1-2011/158926
- WO-A1-2012/025775
- WO-A1-2012/124768
- DE-A1-102011 017 762

## Description

L'invention concerne un dispositif de récupération d'énergie thermique d'un moteur à combustion interne. Un tel dispositif est décrit par exemple dans le document EP 2 336 537 A1. Les véhicules équipés de moteurs à combustion interne produisent une quantité importante d'énergie thermique, qui est parfois utilisée pour le chauffage de l'habitacle du véhicule, et est généralement dissipée par l'intermédiaire d'un circuit de refroidissement comportant un radiateur par l'air extérieur au véhicule. Cette énergie est donc perdue pour le véhicule et n'est pas valorisée.

Des systèmes de récupération d'énergie basés sur des circuits de fluide à changement d'état soumis à un cycle thermodynamique correspondant à un cycle de Rankine, ou à un cycle voisin, par exemple un cycle de type Rankine-Hirn, ont été proposés pour récupérer une partie de l'énergie thermique dégagée par un moteur de véhicule. Une partie de l'énergie thermique peut ainsi être convertie en énergie mécanique.

Cette énergie mécanique récupérée peut être directement utilisée pour générer un couple additionnel améliorant ainsi le rendement du moteur à combustion interne, et réduisant la consommation globale en carburant du moteur.

Ainsi, la demande de brevet FR2884556 décrit un système de récupération d'énergie par cycle Rankine, comprenant un échangeur couplant directement la ligne des gaz d'échappement et le circuit de Rankine. Une telle architecture de récupération d'énergie directement au niveau de la ligne d'échappement pose des problèmes d'encombrement physique. En outre les échangeurs entrant en jeu doivent supporter des gradients thermiques très important, donc sont coûteux à réaliser.

L'invention a pour but de proposer un système de récupération d'énergie qui est moins coûteux à réaliser que les systèmes disposés sur la ligne d'échappement, qui est plus compatible que ceux-ci avec l'encombrement des organes sous le capot moteur, et qui permet en outre, lors des démarrages à froid du véhicule, d'assurer un réchauffement rapide de l'habitacle du véhicule si les occupants du véhicule en éprouvent le besoin.

L'invention propose un système de récupération d'énergie comprenant un moteur à combustion interne d'un véhicule automobile, selon la revendication 1.

De manière préférentielle, le second circuit est configuré pour que le fluide à changement d'état puisse entraîner mécaniquement en rotation, lorsque le fluide se détend dans la machine de détente, un arbre de sortie de la machine de détente lié par une courroie à l'arbre du moteur.

Avantageusement, le moteur est un moteur de type diesel. Selon un mode de réalisation préféré, la liaison entre la machine de détente et l'arbre de sortie du moteur à combustion interne peut être débrayable. Avantageusement, le second circuit comprend un condenseur à air faisant office de source froide pour le second circuit, situé en aval de la machine de détente et permettant de ramener à l'état liquide le fluide du second circuit en évacuant des calories du second circuit vers l'atmosphère. Le condenseur peut être un échangeur traversé d'une part par le second circuit, et traversé également par un circuit de climatisation du véhicule. On réduit ainsi l'encombrement global des circuits de fluides à changement d'état présents sur le véhicule.

Avantageusement, le système comprend un circuit de recirculation partielle des gaz d'échappement du moteur, le premier échangeur étant placé de manière à prélever les calories des gaz d'échappement au niveau du circuit de recirculation. Le circuit de recirculation partielle peut comprendre une tubulure de recirculation de type EGR HP, ramenant une partie des gaz d'échappement de l'aval des cylindres du moteur vers un collecteur d'admission du moteur ou vers l'entrée des cylindres du moteur, sans passer par un turbocompresseur du moteur. Selon d'autres variantes de réalisation, le circuit de recirculation peut comprendre une tubulure de type EGR BP, ramenant les gaz d'échappement vers l'entrée d'un turbocompresseur. Le premier circuit est muni d'une pompe apte à imposer un sens constant de circulation du liquide de refroidissement au travers du premier échangeur et du second échangeur. On considère qu'un premier élément du premier circuit est en aval par rapport à un second élément de ce circuit, si le premier élément se situe en aval du second élément par rapport au sens de circulation de liquide de refroidissement imposé dans le premier circuit par la pompe.

De manière avantageuse, le premier circuit comprend une branche de récupération en aval du premier échangeur, la branche de récupération traversant successivement vers l'aval, le second échangeur et un aérotherme placé de manière à permettre de chauffer un habitacle du véhicule. Selon un mode de réalisation particulièrement avantageux, le second échangeur, dans lequel le fluide du second circuit passe à l'état de gaz, est monté en série sur la branche de récupération avec un troisième échangeur destiné à apporter des calories supplémentaires au fluide gazeux du second circuit sortant du second échangeur. Le second et le troisième échangeur peuvent éventuellement ne former qu'une seule pièce, assurant les deux fonctions d'évaporateur et de surchauffeur. Selon une autre variante de réalisation, le second échangeur faisant office d'évaporateur pour le second circuit, est monté en parallèle sur le premier circuit, avec un troisième évaporateur faisant office de surchauffeur pour le second circuit. Le surchauffeur se trouve alors en sortie de l'évaporateur sur le second circuit, mais est disposé sur une branche du premier circuit qui est branchée en parallèle à la portion de la branche de récupération portant l'évaporateur.

Le système peut comprendre sur le premier circuit, un aérotherme pour le chauffage d'un habitacle du véhicule, et une branche de dérivation du premier circuit permettant de faire transiter le liquide du premier échangeur vers l'aérotherme, sans passer par le second échangeur.

Avantageusement, le système comprend un capteur de température de liquide de refroidissement en sortie du premier échangeur, et un système d'au moins une vanne commandable en fonction de la température mesurée pour modifier les débits de liquide de refroidissement envoyés respectivement dans la branche de dérivation et au travers du second échangeur. Selon un mode de réalisation préféré, la branche de dérivation du premier circuit est montée en parallèle d'une branche de récupération du premier circuit sur laquelle se trouve le premier échangeur, et le circuit comprend une vanne trois voies à l'embranchement amont entre la branche de dérivation et la branche de récupération. La vanne trois voies est commandée en fonction de la température mesurée par le capteur, par exemple à l'aide d'une unité de commande électronique recevant un signal du capteur de température. De manière préférentielle, la vanne ou l'unité de commande électronique associée est configurée pour faire transiter le liquide de refroidissement dans la branche de récupération quand la température de liquide de refroidissement en sortie du premier échangeur est supérieure à une première température seuil, et pour faire transiter le liquide de refroidissement dans la branche de dérivation dans le cas contraire. Selon une autre variante de réalisation, la vanne peut être commandée de manière à augmenter le débit dans la vanne de dérivation quand la température mesurée est inférieure à une température seuil, sans interrompre le débit dans la branche de récupération. Selon un mode de réalisation préféré, la vanne peut être commandée par une unité de commande électronique pour empêcher la circulation de liquide de refroidissement dans la branche de récupération quand on souhaite obtenir un chauffage rapide de l'habitacle, lors d'un démarrage à froid par exemple. L'unité de commande électronique peut par exemple interdire la circulation de fluide dans le second échangeur quand une demande de chauffage de l'habitacle est activée et quand une température de liquide inférieure à une première température seuil est détectée par le capteur de température.

Avantageusement, le système peut comprendre un système d'embrayage ou de roue libre entre la machine de détente et un arbre de sortie du moteur à combustion interne. De manière préférentielle, l'arbre de sortie du moteur à combustion interne peut entraîner en rotation, par exemple à l'aide d'un engrenage, ou d'un système de poulies, un arbre secondaire relié par l'embrayage ou par la roue libre à un arbre de sortie de la machine de détente. L'embrayage peut par exemple être commandé par une unité de commande électronique, configurée pour fermer l'embrayage quand une consigne d'accélération du moteur est positive, et quand simultanément la température mesurée par le capteur est supérieure à une seconde température seuil. La seconde température seuil peut être égale à la première température seuil.

De manière préférentielle, le premier circuit traverse le moteur à combustion interne en amont du premier échangeur, et comprend un radiateur configuré pour évacuer vers l'atmosphère des calories du premier circuit, le radiateur étant connecté en parallèle du premier échangeur.

Selon un mode de réalisation particulièrement avantageux, le premier circuit traverse le moteur à combustion interne en amont du premier échangeur, et comprend une branche de refroidissement en aval du moteur à combustion interne, connectée en parallèle par rapport à une branche comprenant la branche de récupération et le premier échangeur. La branche de refroidissement traverse le radiateur. Le premier circuit est muni d'une pompe apte à imposer un sens constant de circulation au travers du premier échangeur, du second échangeur, et du radiateur.

Le système peut comprendre un thermostat, configuré pour limiter ou interrompre le débit de liquide dans le radiateur quand la température de liquide traversant le thermostat est inférieure à une troisième température seuil. Cette troisième température seuil peut être différente de la première et de la seconde température seuil.

Selon un exemple qui ne forme pas partie de l'invention, le système peut comprendre une première pompe à débit commandable placée sur le premier circuit de manière à imposer le débit de liquide de refroidissement traversant le second échangeur. Selon un mode de réalisation particulièrement avantageux, le système comprend une unité de commande électronique configurée pour faire varier le débit de la première pompe en fonction de paramètres incluant le point de fonctionnement du moteur à combustion interne.

Avantageusement, le second circuit comprend alors une pompe mécanique dont un arbre est solidaire en rotation d'un arbre de sortie de la machine de détente. Avantageusement, la pompe mécanique est dimensionnée pour pouvoir assurer à elle seule la circulation de fluide dans le second circuit.

Selon l'invention, le système comprend une seconde pompe à débit commandable, placée sur le second circuit de manière à imposer dans le second circuit, le débit de fluide traversant le second échangeur. Selon un mode de réalisation préféré, le système comprend une unité de commande électronique configurée pour faire varier le débit de la seconde pompe en fonction de paramètres incluant le point de fonctionnement du moteur à combustion interne et la vitesse du véhicule. L'exemple qui ne forme pas partie de l'invention et l'invention ne se cumulent généralement pas, le système étant équipé soit de la première pompe à débit commandable et non de la seconde, soit de la seconde pompe à débit commandable et non de la première.

Selon l'invention, le système comprend un détendeur monté, en parallèle de la machine de détente, sur le second circuit, et une vanne en amont du détendeur et de la machine de détente, apte à envoyer sélectivement le fluide du second circuit soit au travers de la machine de détente, soit au travers du détendeur. Selon un mode de réalisation avantageux, le détendeur peut être commandé de manière à envoyer le fluide au travers du détendeur quand on souhaite utiliser le second circuit pour évacuer des calories du premier circuit, sans récupérer d'énergie mécanique sur la machine de détente, par exemple quand le moteur à combustion interne tourne au ralenti.

L'invention propose également un procédé de gestion de l'énergie mise en œuvre par un système de récupération d'énergie selon la revendication 6.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est une vue schématique montrant un moteur de véhicule automobile équipé d'un système de récupération d'énergie comme exemple qui ne fait pas partie de l'invention, et
- la figure 2 est une vue schématique montrant un moteur de véhicule automobile équipé d'un autre système de récupération d'énergie selon l'invention.

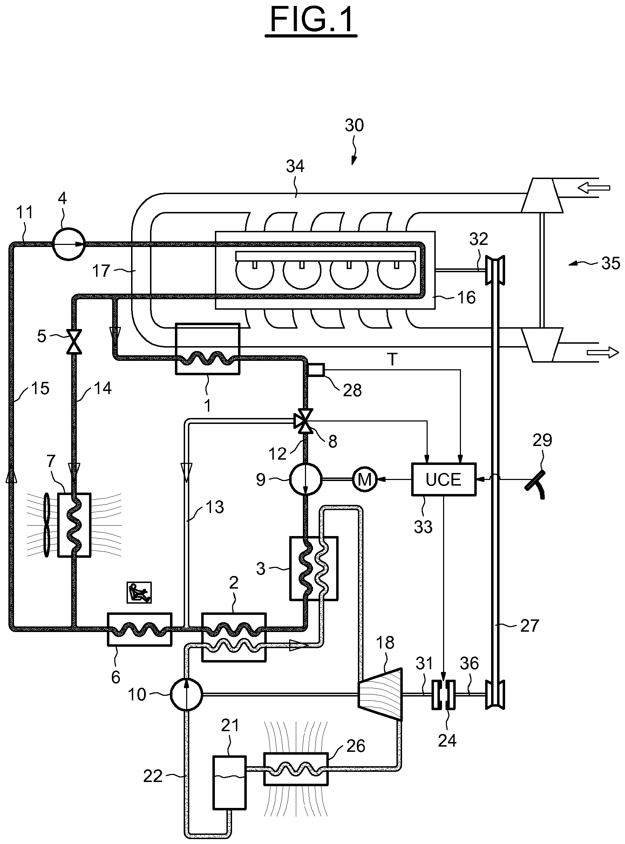

Tel qu'illustré sur la figure 1, un système 30 de récupération d'énergie thermique d'un moteur 16 à combustion interne comporte un circuit de refroidissement 11 capable de faire circuler un liquide de refroidissement. Le circuit de refroidissement 11 traverse des canalisations de refroidissement du moteur 16, suivant une direction d'écoulement imposée par une pompe mécanique 4, couplée avec le moteur.

En aval du moteur 16, le circuit de refroidissement 11 comporte une branche de récupération 12, une branche de refroidissement 14 connectées en parallèle l'une par rapport à l'autre et qui déversent toutes deux le liquide qui les traverse dans une branche de retour 15 à partir de laquelle le liquide de refroidissement est ensuite réinjecté à l'aide de la pompe 4 vers l'amont des canalisations de refroidissement du moteur 16.

Sur la branche de refroidissement 14, est placé un radiateur principal 7 du véhicule qui permet de refroidir le liquide traversant la branche de refroidissement 14 par échange thermique avec de l'air extérieur au véhicule. Un thermostat 5, placé sur la branche de refroidissement 14, par exemple en amont du radiateur 7, est réglé de manière à diminuer ou à interrompre le flux de liquide traversant la branche 14 quand la température détectée par le thermostat 5 devient inférieure à une température seuil du thermostat.

Le moteur 16 comprend une tubulure 17 de recirculation des gaz d'échappement, qui permet ici de renvoyer des gaz chauds sortant du cylindre du moteur 16 vers un collecteur d'admission 34 du moteur 16.

On dit ici que la recirculation est de type EGR ("Exhaust Gas recirculation") HP ("Haute Pression") car les gaz brûlés sont récupérés avant d'avoir franchi la turbine d'un turbocompresseur 35 du moteur 16.

L'invention pourrait, également, s'appliquer à une tubulure de gaz recyclant des gaz à basse pression, typiquement en prélevant ces gaz en aval d'une turbine du turbocompresseur 35 et les réinjectant en amont du turbocompresseur 35.

Un premier échangeur ou refroidisseur EGR référencé 1 permet de récupérer des calories des gaz d'échappement traversant la tubulure 7. Dans l'échangeur 1, les calories des gaz d'échappement servent à réchauffer le liquide traversant l'échangeur 1. La branche de récupération 12 du premier circuit traverse le refroidisseur 1, une vanne trois voies 8, une pompe électrique à débit modulable 9 également appelée pompe à débit variable,, un second échangeur 2, un troisième échangeur 3 et un aérotherme 6. La branche de récupération 12 traverse les éléments cités dans l'ordre suivant : le refroidisseur 1, la vanne trois voies 8, la pompe électrique à débit modulable 9, le troisième échangeur 3, le second échangeur 2, et l'aérotherme 6. En aval du refroidisseur 1, la branche de récupération 12 est équipée d'un capteur de température 28 permettant de mesurer la température T du liquide sortant du refroidisseur 1.

Le capteur de température 28 est connecté à une unité de commande électronique 33, également appelée UCE 33. La vanne trois voies 8 permet d'envoyer sélectivement le liquide de la branche de récupération 12 soit au travers de la pompe 9 et des deux échangeurs 2 et 3, soit dans une branche de dérivation 13 qui envoie le liquide arrivant du refroidisseur 1 vers l'entrée de l'aérotherme 6.

L'aérotherme 6 permet d'utiliser les calories du liquide de la branche de récupération 12 pour chauffer l'habitacle du véhicule. Typiquement, l'unité de commande électronique 33 est configurée pour envoyer le liquide arrivant du refroidisseur 1 directement vers l'aérotherme 6 lors d'un démarrage à froid du véhicule.

Lors d'un tel démarrage à froid, le thermostat 5 est également fermé si bien que toutes les calories récupérées par le liquide du circuit 11, récupérées pour une petite partie sur le moteur 16 et pour une partie plus importante sur le refroidisseur EGR 1, sont ainsi disponibles pour chauffer rapidement l'habitacle du véhicule.

L'unité de commande électronique 33 commande le débit imposé à la pompe 9 et peut ainsi réguler l'intensité des échanges caloriques possibles au niveau des échangeurs 2 et 3.

Les échangeurs 2 et 3 permettent de céder des calories de la branche de récupération du premier circuit 11 à un fluide circulant dans un second circuit 22 que l'on peut éventuellement désigner par « circuit de Rankine », car le cycle du fluide circulant dans ce circuit se rapproche d'un cycle thermodynamique connu sous le nom de cycle de Rankine.

Le circuit de Rankine comprend au moins le second échangeur 2, dans lequel le fluide du second circuit 22 entre à l'état liquide sous l'effet d'une force motrice d'une pompe 10 située en amont de l'échangeur 2, une machine de détente 18, et un condenseur 26 qui est ici un condenseur à air permettant de ramener à l'état liquide le fluide du second circuit 22. Dans l'échangeur 2, le fluide passe à l'état gazeux grâce aux calories apportées par le liquide du circuit de refroidissement 11. Dans la machine de détente 18, le gaz du second circuit 22 se détend en cédant de l'énergie mécanique à un arbre 31. Le second circuit 22 comprend au moins une pompe 10, ici la pompe 10 entraînée de manière mécanique à partir d'un arbre de sortie 22 du moteur thermique 16.

Le fluide ayant traversé le condenseur 26 peut transiter par une bouteille 21 à partir du fond de laquelle le fluide est réinjecté dans le circuit 22 à l'aide de la pompe 10. La bouteille 21 permet d'éviter que des bulles de fluide à l'état gazeux transitent dans le circuit dans la portion comprise entre la bouteille et le second échangeur 2.

Selon les variantes de réalisation, le circuit de Rankine peut comprendre un troisième échangeur 3, permettant à l'aide des calories apportées par le circuit de refroidissement 11, d'augmenter la pression du fluide à l'état gazeux issu du second échangeur 2.

Ce troisième échangeur ou surchauffeur se trouve sur le circuit de Rankine 22 en sortie du second échangeur 2 ou évaporateur du circuit de Rankine. De manière préférentielle, le positionnement des échangeurs 2 et 3 est également un positionnement en série sur la branche de récupération 12 du premier circuit, le liquide de refroidissement dans le premier circuit et le fluide du circuit de Rankine circulant à contre courant l'un de l'autre.

Dans l'exemple illustrée en figure 1, qui ne forme pas partie de l'invention, la pompe 10, assurant la circulation de fluide dans le circuit de Rankine 22, est entraînée par un arbre solidaire en rotation de l'arbre de sortie 31 de la machine de détente 18. Cet arbre de sortie 31 peut être solidarisé à l'aide d'un embrayage 24 commandé par l'unité de commande électronique 33, avec un arbre secondaire 36 lui-même relié par un système de poulies avec un arbre de sortie 32 du moteur thermique 16 par exemple à l'aide d'une courroie 27.

L'électrovanne trois voies 8 permet de court-circuiter les deux échangeurs de chaleur, surchauffeur 3 et évaporateur 2, lorsque le liquide de refroidissement en sortie de l'échangeur EGR n'est pas assez chaud (par exemple de température inférieure à 85°C) et lorsque le moteur 16 est au ralenti. Par ailleurs, lors d'un démarrage à froid du véhicule, cet agencement particulier permet d'obtenir une montée en température rapide de l'habitacle. La pompe électrique 9 permet de contrôler le débit du liquide de refroidissement dans les échangeurs thermiques surchauffeur 3 et évaporateur 2 quand le cycle de Rankine est en marche. Le pilotage de cette pompe électrique 9 permet de contrôler le débit, donc la quantité, de liquide de refroidissement impliqué dans les transferts thermiques afin d'optimiser la puissance délivrée par le cycle de Rankine. On parle ici de cycle de Rankine au sens large. On considère en effet un cycle avec un fluide à transformation de phase. Le fluide est mû par une pompe dans un circuit. Successivement, le fluide :
- reçoit des calories permettant de vaporiser le fluide,
- cède un travail mécanique en se détendant dans une machine de détente,
- est ensuite refroidi pour être condensé et pouvoir être réinjecté par la pompe dans le circuit.

Les phases de compression ou de détente du fluide peuvent s'écarter de phases de compression strictement isothermes ou adiabatiques préconisées par le cycle de Rankine idéal.

La pompe mécanique 10 du circuit de Rankine comprime le fluide de travail. Le fluide de travail se réchauffe et se vaporise ensuite dans l'évaporateur 2 lors d'un échange thermique avec le liquide de refroidissement du premier circuit 11. Le fluide de travail est ensuite surchauffé dans le second échangeur surchauffeur 3, toujours par échange thermique avec le liquide de refroidissement du premier circuit 11. Le fluide de travail à l'état de vapeur subit ensuite une détente dans la machine de détente 18 (par ex : machine de type "scroll") fournissant ainsi un travail récupérable sur un arbre rotatif 31. L'arbre 31 de la machine de détente peut être accouplé au moteur thermique via la courroie 27 et l'embrayage 24. Le fluide de travail est ensuite ramené à son état liquide dans un condenseur à air 26 qui le refroidit. La bouteille 21 assure que le fluide de travail revient vers la pompe 10 à l'état de liquide saturé. En d'autres termes, on évite de réinjecter des bulles dans la pompe 10. Dans la configuration de la figure 1, la pompe 10 et la machine de détente 18 sont couplées mécaniquement.

Lors d'un démarrage à froid, on peut ouvrir la vanne de dérivation 8 et ainsi court-circuiter les échangeurs à haute pression (évaporateur 2 et surchauffeur 3) de la boucle de Rankine 11. Ainsi, les calories reçues des gaz d'échappement sont transférées essentiellement vers l'aérotherme 6, ce qui permet d'élever rapidement la température de l'habitacle.

Lorsque la température mesurée par le capteur 28 atteint un seuil prédéfini, la vanne de dérivation 8 est fermée et le circuit à cycle de Rankine permet d'exploiter les calories reçues de la source chaude et de les transformer en énergie mécanique grâce à la machine de détente 18. L'embrayage 24 est engagé lorsque la consigne de pédale d'accélération 29 du véhicule est positive et que la température du liquide de refroidissement en sortie de l'échangeur EGR atteint un seuil prédéfini. La pompe électrique 10 est pilotée à partir du point de fonctionnement du moteur et de la vitesse du véhicule de manière à maximiser la puissance récupérée sur le circuit de Rankine 22.

Quand la température du liquide de refroidissement en sortie du moteur 16 atteint un seuil de température (par exemple 85°C), le thermostat 5 s'ouvre. Le radiateur externe 7 refroidit le liquide de refroidissement moteur par une circulation de l'air extérieur au véhicule.

Quand le moteur 16 tourne au ralenti, l'unité de commande électronique 33 ouvre l'embrayage 24 et place la vanne 8 de manière à court-circuiter les échangeurs de chaleur surchauffeur 3 et évaporateur 2.

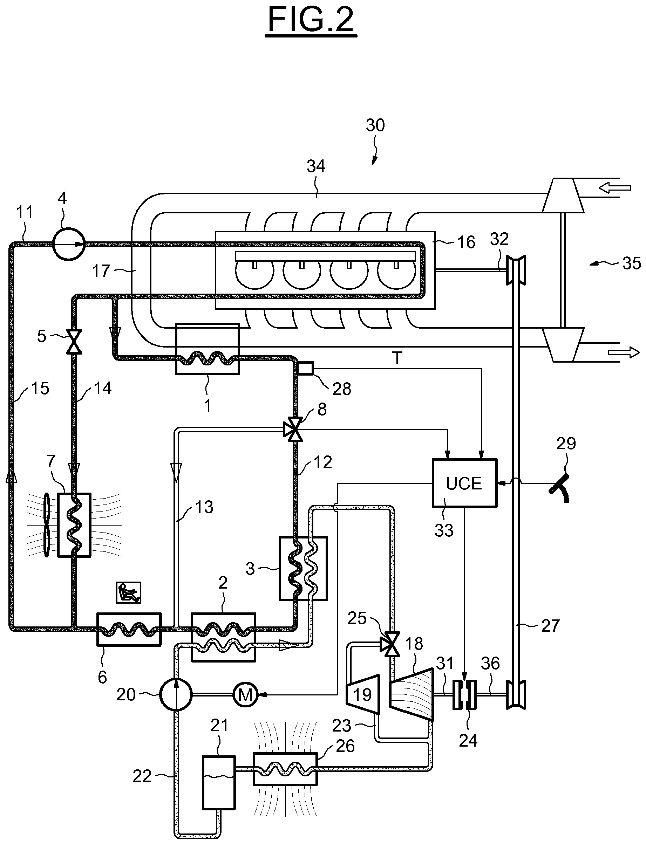

Selon l'invention, illustré sur la figure 2, l'optimisation du point de fonctionnement du cycle de Rankine n'est pas effectuée par le pilotage, à l'aide de la pompe 9, du débit de liquide de refroidissement impliqué dans les transferts thermiques avec le cycle de Rankine, mais par le pilotage de la vitesse de rotation d'un pompe électrique 20 à vitesse régulable, et remplaçant la pompe tournant avec l'arbre secondaire 36. On retrouve sur la figure 2 des éléments communs à la figure 1, les mêmes éléments étant alors désignés par les mêmes références.

Sur la figure 2, la pompe 20 n'est pas couplée mécaniquement avec la machine de détente 18. Une vanne trois voies 25 est disposée en amont de la machine de détente 18, permettant de court-circuiter la machine de détente. Un détenteur 19 est monté dans la branche de dérivation permettant de contourner la machine de détente 18.

Le pilotage de l'embrayage 24 reste identique par rapport à l'exemple de la figure 1.

Quand le circuit de Rankine 22 est actif (moteur chaud et consigne de pédale d'accélération positive, vanne trois voies 8 envoyant le fluide de refroidissement vers les échangeurs 2 et 3), la vanne 25 ferme la portion de dérivation comprenant le détendeur 19. La pompe 20 est pilotée à partir du point de fonctionnement du moteur 16 (par exemple couple et vitesse de rotation du moteur 16) et de la vitesse du véhicule afin de maximiser la puissance récupérée sur l'arbre 31 de la machine de détente 18.

Lorsque le moteur 16 est chaud et tourne au ralenti, l'unité de commande électronique 33 ouvre l'embrayage 24 et place la vanne 25 de manière à court-circuiter la machine de détente 18. Le fluide de travail du circuit 22 est ainsi détendu en passant par le détendeur 19. La pompe 20 tourne à une vitesse faible proche d'une vitesse minimale permettant la circulation du fluide de travail dans le circuit de Rankine 22. Le circuit de Rankine 22 contribue alors à évacuer les calories du premier circuit 11, en limitant la consommation énergétique de la pompe 20.

Ainsi, lorsque le moteur 16 tourne au ralenti, le circuit de Rankine 22 permet d'évacuer des calories du circuit de refroidissement 11 afin de soulager le radiateur principal 7. Le radiateur 7 peut être donc de dimensions plus réduites que dans le mode de réalisation de la figure 1. En revanche, le rendement global du circuit de Rankine 22 est meilleur dans le mode de réalisation de la figure 1, car on économise l'énergie nécessaire à faire tourner la pompe 20.

Le circuit de refroidissement peut comporter des branches et des organes supplémentaires non décrits sur les figures 1 et 2, par exemple des portions dédiées au refroidissement de réservoirs d'huile, ou un réservoir de liquide permettant d'ajuster la pression globale dans le circuit de refroidissement. Les pompes 4 et 9 du circuit de refroidissement 11 pourraient être montées en des points du circuit 11 différents de ceux illustrés, à condition d'assurer les mêmes sens de circulation du liquide de refroidissement que ceux indiqués sur les figures.

Selon une variante de réalisation, le premier échangeur pourrait être monté en un point du circuit des gaz d'échappement du moteur distinct du circuit de recirculation des gaz.

Le système de récupération d'énergie selon l'invention permet de réduire la consommation d'énergie globale du véhicule, tout en optimisant le confort thermique de l'habitacle du véhicule. Le système de récupération peut fonctionner avec une dimension réduite de radiateur du système de liquide de refroidissement du moteur.

## Revendications

1. Système (30) de récupération d'énergie comprenant un moteur (16) à combustion interne d'un véhicule automobile, ledit système (30) comprenant un premier circuit (11) de liquide de refroidissement et un second circuit (22), le premier circuit (11) de liquide de refroidissement comprenant un premier échangeur (1) monté de façon à prélever des calories des gaz d'échappement, et du second circuit (22) dans lequel circule un fluide à changement d'état et comprenant une machine de détente (18), le premier circuit (11) comprenant au moins un second échangeur (2) servant de source chaude pour le second circuit (22) pour faire passer à l'état gazeux le fluide du second circuit (22), la machine de détente (18) étant configurée pour pouvoir au moins par moments être solidarisée en rotation avec un arbre (32) de sortie du moteur (16) à combustion interne, **caractérisé en ce qu'**il comprend une pompe (20) à débit commandable, placée sur le second circuit (22) de manière à imposer dans le second circuit (22), le débit de fluide traversant le second échangeur (2), et **en ce qu'**il comprend un détendeur (19) monté, en parallèle de la machine de détente (18), sur le second circuit (22), et une vanne (25) en amont du détendeur (19) et de la machine de détente (18), apte à envoyer sélectivement le fluide du second circuit (22) soit au travers de la machine de détente (18), soit au travers du détendeur (19).

2. Système selon la revendication 1, comprenant un circuit (17) de recirculation partielle des gaz d'échappement du moteur (16), le premier échangeur (1) étant placé de manière à prélever les calories des gaz d'échappement au niveau du circuit de recirculation (17).

3. Système selon l'une quelconque des revendications précédentes, comprenant sur le premier circuit (11) un aérotherme (6) pour le chauffage d'un habitacle du véhicule, et une branche de dérivation (13) du premier circuit (11) permettant de faire transiter le liquide du premier échangeur (1) vers l'aérotherme (6), sans passer par le second échangeur (2).

4. Système selon la revendication 3, comprenant un capteur (28) de température de liquide de refroidissement en sortie du premier échangeur (1), et un système d'au moins une vanne commandable (8) en fonction de la température mesurée (T), pour modifier les débits de liquide de refroidissement envoyés respectivement dans la branche de dérivation (13) et au travers du second échangeur (2).

5. Système selon l'une quelconque des revendications précédentes, comprenant un système d'embrayage (24) ou de roue libre entre la machine de détente (18) et l'arbre de sortie (32) du moteur (16) à combustion interne.

6. Procédé de gestion de l'énergie mise en œuvre par un système (30) de récupération d'énergie selon les revendications 1 à 5, dans lequel on utilise un circuit de liquide de refroidissement (11) du moteur (16) pour prélever également des calories des gaz d'échappement du véhicule, et pour transmettre au moins une partie des calories prélevées à un circuit de fluide à changement d'état placé de manière à pouvoir fournir de l'énergie mécanique à un arbre de sortie (32) du moteur (16) à combustion interne, **caractérisé en ce que** l'on débraye une liaison mécanique entre une machine de détente (18) du circuit de fluide (22) et le moteur (16) à combustion interne si la température (T) du liquide de refroidissement en amont du circuit de fluide (22) à changement d'état est inférieure à un seuil, ou si une consigne d'accélération du moteur (16) est négative, on régule, à l'aide d'une pompe à débit commandable (20), les échanges thermiques entre le circuit (11) de liquide de refroidissement et le circuit (22) de fluide à changement d'état, en fonction de paramètres incluant un point de fonctionnement du moteur (16) et la vitesse du véhicule, on place la vanne (25) de manière à court-circuiter la machine de détente (18), le fluide à changement d'état circulant au travers du détendeur (19).

## Patentansprüche

1. System (30) zur Rückgewinnung von Energie, welches eine Brennkraftmaschine (16) eines Kraftfahrzeugs umfasst, wobei das System (30) einen ersten Kühlflüssigkeitskreislauf (11) und einen zweiten Kreislauf (22) umfasst, wobei der erste Kühlflüssigkeitskreislauf (11) einen ersten Wärmetauscher (1) umfasst, der so angebracht ist, dass er den Abgasen Kalorien entzieht, und wobei im zweiten Kreislauf (22), der eine Expansionsmaschine (18) umfasst, ein Fluid mit Zustandsänderung zirkuliert, wobei der erste Kreislauf (11) mindestens einen zweiten Wärmetauscher (2) umfasst, der als Wärmequelle für den zweiten Kreislauf (22) dient, um das Fluid des zweiten Kreislaufs (22) in den gasförmigen Zustand übergehen zu lassen, wobei die Expansionsmaschine (18) dafür ausgelegt ist, wenigstens zeitweise mit einer Abtriebswelle (32) der Brennkraftmaschine (16) drehfest verbunden werden zu können, **dadurch gekennzeichnet, dass** es eine Pumpe (20) mit steuerbarer Fördermenge umfasst, die im zweiten Kreislauf (22) angeordnet ist, so dass sie im zweiten Kreislauf (22) die Durchflussmenge des Fluids bestimmt, das den zweiten Wärmetauscher (2) durchströmt, und dadurch, dass es einen Druckminderer (19) umfasst, der parallel zur Expansionsmaschine (18) im zweiten Kreislauf (22) angebracht ist, und ein Ventil (25) stromaufwärts des Druckminderers (19) und der Expansionsmaschine (18), das geeignet ist, das Fluid des zweiten Kreislaufs (22) selektiv entweder durch die Expansionsmaschine (18) oder durch den Druckminderer (19) zu leiten.

2. System nach Anspruch 1, welches einen Kreislauf (17) der teilweisen Rückführung der Abgase des Motors (16) umfasst, wobei der erste Wärmetauscher (1) so angeordnet ist, dass er die Kalorien aus den Abgasen am Rückführungskreislauf (17) entzieht.

3. System nach einem der vorhergehenden Ansprüche, welches im ersten Kreislauf (11) einen Lufterhitzer (6) zum Heizen eines Innenraums des Fahrzeugs umfasst, und einen Bypasszweig (13) des ersten Kreislaufs (11), der es ermöglicht, die Flüssigkeit des ersten Wärmetauschers (1) zum Lufterhitzer (6) strömen zu lassen, ohne durch den zweiten Wärmetauscher (2) zu strömen.

4. System nach Anspruch 3, welches einen Temperatursensor (28) für die Kühlflüssigkeit am Ausgang des ersten Wärmetauschers (1) umfasst, sowie ein System wenigstens eines in Abhängigkeit von der gemessenen Temperatur (T) steuerbaren Ventils (8), um die Durchflussmengen der Kühlflüssigkeit zu ändern, die in den Bypasszweig (13) bzw. durch den zweiten Wärmetauscher (2) geleitet werden.

5. System nach einem der vorhergehenden Ansprüche, welches ein System der Kupplung (24) oder des Freilaufs zwischen der Expansionsmaschine (18) und der Abtriebswelle (32) der Brennkraftmaschine (16) umfasst.

6. Verfahren zum Energiemanagement, das von einem System (30) zur Rückgewinnung von Energie nach den Ansprüchen 1 bis 5 durchgeführt wird, wobei ein Kühlflüssigkeitskreislauf (11) des Motors (16) verwendet wird, um den Abgasen des Fahrzeugs ebenfalls Kalorien zu entziehen und um wenigstens einen Teil der entzogenen Kalorien auf einen Kreislauf eines Fluids mit Zustandsänderung zu übertragen, der so angeordnet ist, dass er einer Abtriebswelle (32) der Brennkraftmaschine (16) mechanische Energie liefern kann, **dadurch gekennzeichnet, dass** eine mechanische Verbindung zwischen einer Expansionsmaschine (18) des Fluidkreislaufs (22) und der Brennkraftmaschine (16) ausgekuppelt wird, wenn die Temperatur (T) der Kühlflüssigkeit stromaufwärts des Kreislaufs (22) des Fluids mit Zustandsänderung niedriger als ein Schwellenwert ist oder wenn ein Beschleunigungssollwert des Motors (16) negativ ist, dass der Wärmeaustausch zwischen dem Kühlflüssigkeitskreislauf (11) und dem Kreislauf (22) des Fluids mit Zustandsänderung mithilfe einer Pumpe mit steuerbarer Fördermenge (20) in Abhängigkeit von Parametern geregelt wird, die einen Betriebspunkt des Motors (16) und die Geschwindigkeit des Fahrzeugs umfassen, und dass das Ventil (25) so angeordnet wird, dass die Expansionsmaschine (18) kurzgeschlossen wird, wobei das Fluid mit Zustandsänderung durch den Druckminderer (19) strömt.

## Claims

1. Energy recuperation system (30) comprising a motor vehicle internal combustion engine (16), said system (30) comprising a first coolant circuit (11) and a second circuit (22), the first coolant circuit (11) comprising a first exchanger (1) mounted in such a way as to collect heat energy from the exhaust gases, and from the second circuit (22) through which there circulates a state-change fluid and which comprises an expansion machine (18), the first circuit (11) comprising at least a second exchanger (2) serving as a hot source for the second circuit (22) so as to cause the fluid of the second circuit (22) to pass into the gaseous state, the expansion machine (18) being configured in such a way as to be able, at least sometimes, to be rotationally secured to an output shaft (32) of the internal combustion engine (16) so as to rotate as one therewith, **characterized in that** it comprises a controllable-output pump (20), placed on the second circuit (22) in such a way as to dictate, in the second circuit (22), the flow rate of fluid passing through the second exchanger (2), and **in that** it comprises an expansion device (19) mounted, in parallel with the expansion machine (18), on the second circuit (22), and a valve (25) upstream of the expansion device (19) and of the expansion machine (18) and able to send the fluid from the second circuit (22) selectively either through the expansion machine (18) or through the expansion device (19).

2. System according to Claim 1, comprising a recirculation circuit (17) for the partial recirculation of the exhaust gases from the engine (16), the first exchanger (1) being positioned in such a way as to collect the heat energy from the exhaust gases in the recirculation circuit (17).

3. System according to either one of the preceding claims, comprising, on the first circuit (11), a unit heater (6) for heating a vehicle cabin interior, and a bypass leg (13) bypassing the first circuit (11) to allow the liquid from the first exchanger (1) to pass to the unit heater (6) without passing through the second exchanger (2).

4. System according to Claim 3, comprising a temperature sensor (28) sensing the temperature of the coolant leaving the first exchanger (1), and a system of at least one controllable valve (8), controlled as a function of the measured temperature (T), for modifying the coolant flow rates sent respectively into the bypass leg (13) and through the second exchanger (2).

5. System according to any one of the preceding claims, comprising a clutch system (24) or freewheel system between the expansion machine (18) and the output shaft (32) of the internal combustion engine (16).

6. Energy management method implemented by an energy recuperation system (30) according to Claims 1 to 5, wherein use is made of a coolant circuit (11) that cools the engine (16) to also collect heat energy from the exhaust gases of the vehicle and to transmit at least some of the collected heat energy to a state-change fluid circuit positioned in such a way as to be able to supply mechanical energy to an output shaft (32) of the internal combustion engine (16), **characterized in that** a mechanical connection between an expansion machine (18) of the fluid circuit (22) and the internal combustion engine (16) is disengaged if the temperature (T) of the coolant upstream of the state-change fluid circuit (22) is below a threshold or if a setpoint for the acceleration of the engine (16) is negative, a controllable-output pump (20) is used to regulate the exchanges of heat between the coolant circuit (11) and the state-change fluid circuit (22) on the basis of parameters that include an operating point of the engine (16) and the speed of the vehicle, and the valve (25) is positioned in such a way as to bypass the expansion machine (18), the state-change fluid circulating through the expansion device (19).
